# EUROPÄISCHE PATENTANMELDUNG

(11) **EP 4 345 338 A1**
(43) Veröffentlichungstag der Anmeldung: **03.04.2024**
(21) Anmeldenummer: 23194148.5
(22) Anmeldetag: 30.08.2023
(51) Int. Cl.: F16G 1/08, F16G 1/28

(54) **SELBSTFÜHRENDER ZAHNRIEMEN**

(30) Priorität: 30.09.2022 DE 102022210450
(71) Anmelder: ContiTech Antriebssysteme GmbH, 30165 Hannover (DE)
(72) Erfinder: Schöffer, Jannis, 30165 Hannover (DE); Kucharczyk, Andre, 30165 Hannover (DE); Quass, Jan-Henning, 30165 Hannover (DE); Göser, Hubert, 30165 Hannover (DE)
(74) Vertreter: Continental Corporation

(57) **Zusammenfassung**

Die Erfindung betrifft einen Zahnriemen (2) aufweisend einen Grundkörper aus polymerem Material (3), mehrere Zähne (4) sowie in Längsrichtung (X) verlaufende Festigkeitsträger (6), wobei die Festigkeitsträger (6) im Wesentlichen von dem polymeren Material (3) umgeben sind. Der Zahnriemen (2) weist wenigstens ein in Längsrichtung (X) verlaufendes Führungselement (8) mit einer Außenkontur (10) auf, wobei das Führungselement (8) das polymere Material (3) und wenigstens einen der Festigkeitsträger (6) aufweist. Der Festigkeitsträger (6) ist wenigstens abschnittsweise, vorzugsweise vollständig in dem Führungselement (8) angeordnet.

## Beschreibung

Die Erfindung betrifft einen Zahnriemen gemäß dem Oberbegriff des Anspruchs 1. Die Erfindung betrifft weiterhin einen Riementrieb, ein Fahrrad und eine Hubvorrichtung.

Es ist bei Zahnriemenantrieben seit langem bekannt, ein seitliches Abwandern des Riemens durch den Einfluss von Querkräften von einer Riemenscheibe durch speziell ausgebildete Bordscheiben zu verhindern, die die Antriebs- und bzw. oder Abtriebsscheiben seitlich begrenzen und als eine Art mechanischer Anschlag für den Riemen dienen.

Will man nun auf den Einsatz solcher Bordscheiben verzichten, etwa um einer zu starken Erwärmung des Riemens durch Reibung vorzubeugen oder um Bauraum einzusparen, so muss der Riemen selbst eine gegen seitliches Verrutschen wirkende Führung im Zusammenspiel mit der jeweiligen Riemenscheibe bereitstellen.

Dazu ist es erforderlich, dass sogenannte selbstführende Riemen in ihrer Betriebsposition in Längsrichtung ausgebildete Führungselemente aufweisen, etwa in Längsrichtung des Zahnriemens angeordnete Rippen innerhalb der Zahnlücken oder längs gerichtete Vorsprünge oder Ausnehmungen, die in entsprechende Ausnehmungen oder Vorsprünge der jeweiligen Riemenscheiben eingreifen und die Längsführung bereitstellen.

Es sind aus dem Stand der Technik verschiedene Lösungen selbstführender Riemen bekannt.

Die DE 10 2004 047 158 A1 offenbart einen Riemen mit auf dem Riemenrücken angeordneten Führungselementen. Der Riemen ist auf seiner einen Seite nach Art eines Zahnriemens und auf seiner anderen Seite nach Art eines Zahnriemens oder Keilrippenriemens ausgebildet. Die laterale Führung des Riemens kann über rückenseitig angeordnete Umlenkscheiben erfolgen. Eine ähnliche Lösung wird durch die EP 1448470 B1 und die US 7857106 B2 beschrieben.

Eine weitere Möglichkeit besteht darin, die Zwangsführung des Zahnriemens auf dessen Antriebsseite zu realisieren. Aus der DE 2710749 A1 ist ein Zahnriemen bekannt, der mehrere Führungsabschnitte aufweist. Die Führungsabschnitte sind jeweils um die Oberfläche eines Festigkeitsträgers ausgebildet, wobei ein Führungsabschnitt zwischen einem Paar benachbarter Zähne angeordnet ist. Die Führungsabschnitte sind dazu ausgebildet, in an einer Riemenscheibe ausgebildeten Rillen aufgenommen zu werden. Die Riemenscheibe kann sowohl zum An- oder Abtrieb als auch zur seitlichen Führung des Zahnriemens ausgebildet sein.

Eine ähnliche Lösung ist aus der DE 10 2020 106 251 A1 bekannt. Hier ist zwischen zwei benachbarten Zähnen mindestens ein Vorsprung in Form einer Rippe angeordnet, wobei der Vorsprung dazu ausgebildet ist, in eine korrespondierende Nut einer Riemenscheibe einzugreifen, um den Zahnriemen seitlich zu führen.

In allen zuvor genannten Beispielen zeigt es sich als nachteilig, dass das Führungselement eine geringe Steifigkeit aufweist und sich in Folge von zu großen Querkräften verformen kann. Durch eine sich verformende Führungsrippe kann sich die Toleranz des seitlichen Versatzes des Riemens vergrößern. Auch ist ein Herausspringen der Führungsrippe des Riemens aus der Führungsnut der Riemenscheibe möglich, was bis zu einem Gesamtversagen des Riemens und bzw. oder des Riemenantriebs führen kann. Alle bekannten Lösungen zur Zwangsführung von Zahnriemen können daher nur bei vergleichsweise geringen Querkräften funktionieren.

Der Erfindung liegt daher die Aufgabe zugrunde, die Verformungssteifigkeit von Führungselementen zur Zwangsführung von Zahnriemen zu verbessern. Zusätzlich oder alternativ soll eine Lösung zur Zwangsführung von Zahnriemen bei höheren Querkräften bereitgestellt werden.

Die Lösung dieser Aufgabe ergibt sich durch einen Zahnriemen mit den Merkmalen des unabhängigen Anspruchs 1.

Weitere vorteilhafte Ausbildungen sind in den abhängigen Ansprüchen offenbart. Anspruch 9 offenbart einen Riementrieb mit einem erfindungsgemäßen Zahnriemen.

Anspruch 10 betrifft ein Fahrrad mit einem erfindungsgemäßen Riementrieb. Anspruch 11 betrifft eine Hubvorrichtung mit einem erfindungsgemäßen Riementrieb.

Weitere Vorteile und Merkmale sind der allgemeinen Beschreibung sowie den Ausführungsbeispielen zu entnehmen.

Die vorliegende Anmeldung betrifft einen Zahnriemen, aufweisend einen Grundkörper aus polymerem Material, mehrere Zähne sowie in Längsrichtung verlaufende Festigkeitsträger. Die Festigkeitsträger sind im Wesentlichen von dem polymeren Material umgeben, wobei der Zahnriemen wenigstens ein in Längsrichtung verlaufendes Führungselement mit einer Außenkontur aufweist. Das Führungselement weist das polymere Material und wenigstens einen der Festigkeitsträger auf. Der Festigkeitsträger ist wenigstens abschnittsweise, vorzugsweise vollständig in dem Führungselement angeordnet.

Mit anderen Worten ist der Querschnitt der Festigkeitsträger, welcher vorzugsweise aus Stahl, Aramid oder Carbonfasern gebildet sein kann, zumindest teilweise in dem Führungselement angeordnet. Auf besonders vorteilhafte Weise kann das Führungselement durch den darin angeordneten Festigkeitsträger zusätzlich versteift werden. Das Führungselement ist mit anderen Worten besonders widerstandsfähig gegen mechanische Verformung. So bleibt das Führungselement auch bei hohen Querkräften formstabil, sodass der Zahnriemen stets zuverlässig und mit geringen Toleranzen in lateraler Richtung geführt werden kann. Je größer der Anteil des Querschnitts des Festigkeitsträgers in dem Führungselement ist, umso größer ist die Stabilität bzw. die Steifigkeit des Führungselements gegen Verformung.

Die Steifigkeit des Führungselements und somit die Längsführung des Zahnriemens können außerdem dadurch vergrößert werden, indem mehrere Zugträger in einem Führungselement angeordnet sind.

Die Längsführung des Zahnriemens kann weiterhin dadurch verbessert werden, indem mehrere Führungselemente vorgesehen sind, sodass sich die Querkräfte auf mehrere Führungselemente verteilen können, wodurch sich die spezifische Kraft je Führungselement verringert.

Gemäß einem weiteren Aspekt ist der Festigkeitsträger mit wenigstens 25 %, vorzugsweise 50 % des Durchmessers in dem Führungselement angeordnet. Für eine maximale Kraftübertragung in Längsrichtung zeigt es sich als ideal, dass der Durchmesser des Zugträgers zu einem größtmöglichen Anteil in dem Grundkörper des Zahnriemens angeordnet ist, mit anderen Worten also von möglichst viel polymerem Material umgeben ist. Eine möglichst große Quersteifigkeit des Führungselements kann hingegen dadurch erreicht werden, indem ein größtmöglicher Anteil des Zugträgers in dem Führungselement angeordnet ist. Insbesondere bei einer Anordnung des Festigkeitsträgers mit 50% des Durchmessers in dem Führungselement zeigt sich das Verhältnis von Kraftübertragung in Längsrichtung und Steifigkeit des Führungselementes in Querrichtung als besonders vorteilhaft.

Gemäß einem weiteren Aspekt ist das Führungselement zwischen wenigstens einem Paar benachbarter Zähne angeordnet. Mit anderen Worten ist das Führungselement auf einer Antriebsseite des Zahnriemens angeordnet. Das Führungselement ist dazu ausgebildet, in einer dem Führungselement zugeordneten Führungsrille einer oder mehrerer Riemenscheiben aufgenommen zu werden. Auf besonders vorteilhafte Weise kann die Antriebsseite des Zahnriemens und bzw. oder der Riemenscheibe sowohl zur Kraftübertragung als auch zur seitlichen Führung des Zahnriemens ausgebildet sein. So können mehrere Funktionen in eine Komponente integriert werden, wodurch Kosten eingespart werden können. Außerdem kann der Bauraum entsprechender Riementriebe geringgehalten werden.

Gemäß einem weiteren Aspekt ist das Führungselement auf einer den Zähnen gegenüberliegenden Riemenrückenseite angeordnet. Mit anderen Worten sind die Elemente zur Führung des Zahnriemens und zur Kraftübertragung voneinander getrennt. Diese Ausführungsform ist insbesondere bei Riementrieben mit Rücken- oder Umlenkrollen besonders vorteilhaft, da die Kraftübertragung über die Zähne durch die Führungselemente nicht negativ beeinflusst wird.

Gemäß einem weiteren Aspekt umfasst das Führungselement zwei Festigkeitsträger. Das Führungselement kann so besonders verformungssteif ausgebildet sein.

Gemäß einem weiteren Aspekt ist das polymere Material ein Polyurethan. Zahnriemen mit einem Grundkörper aus Polyurethan können besonders hohe Leistungen übertragen. Weiterhin zeigt es sich als besonders vorteilhaft, dass Polyurethan ein vergleichsweise steifer Werkstoff ist, wodurch das Führungselement zusätzlich versteift werden kann.

Gemäß einem weiteren Aspekt ist die Außenkontur des Führungselements im Querschnitt teilkreisförmig ausgebildet. Hierdurch können die akustischen Eigenschaften des Zahnriemens optimiert werden. Mit anderen Worten ist ein Führungselement mit einer teilkreisförmigem Außenkontur insbesondere bei auftretenden Querkräften leise.

Gemäß einem weiteren Aspekt ist die Außenkontur des Führungselements im Querschnitt trapezförmig ausgebildet. Auf vorteilhafte Weise kann ein Führungselement mit trapezförmiger Außenkontur besonders hohe Querkräfte aufnehmen, wodurch die Zwangsführung des Zahnriemens bei hohen Querkräften verbessert werden kann.

Die Anmeldung betrifft außerdem einen Riementrieb mit wenigstens einer Riemenscheibe und einem erfindungsgemäßen Zahnriemen. Die zuvor genannten Eigenschaften und Vorteile können auf sämtliche Riementriebe übertragen werden, beispielsweise auf Riementriebe in Industriemaschinen, in Hubanwendungen der Lagerlogistik oder in Automobilanwendungen, die einem besonders geringen Bauraumbedarf unterliegen und bzw. oder große Toleranzen in der Ausrichtung der Riemenscheiben zueinander aufweisen.

Die Anmeldung betrifft weiterhin ein Fahrrad mit einem erfindungsgemäßen Riementrieb. Insbesondere bei Fahrrädern mit Zahnriemenantrieben kommt der Zwangsführung eine große Bedeutung zu, da dynamische Kräfte zu Verwindungen im Fahrradrahmen führen können, wodurch sich die Ausrichtung der Riemenscheiben zueinander verändert und Querkräfte auf den Riementrieb übertragen werden können. Ein Zahnriemen mit Führungselementen, die bei hohen und schockartig auftretenden Querkräften formstabil bleiben, ist demzufolge insbesondere bei Fahrradantrieben besonders vorteilhaft.

Die Anmeldung betrifft weiterhin eine Hubvorrichtung mit einem erfindungsgemäßen Riementrieb. Der erfindungsgemäße Riementrieb ist insbesondere bei Hubvorrichtungen vorteilhaft, bei denen die Riemenscheiben in großem Abstand zueinander angeordnet sind. Aufgrund der großen Distanz zueinander können die Riemenscheiben selbst bei einer geringen Winkelabweichung zueinander einen absolut gemessen großen seitlichen Versatz zueinander aufweisen, was eine seitliche Zwangsführung des Zahnriemens erfordert, um ein seitliches Ablaufen des Zahnriemens von der Riemenscheibe zu vermeiden. Eine beispielhafte Anwendung ist eine Hubvorrichtung für Schiffscontainer.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand des Anspruchs 1 und bzw. oder den übrigen unabhängigen Ansprüchen 9 und bzw. oder 10 und bzw. oder 11 kombinierbar sind.

Anhand der Figuren werden im Folgenden zwei Ausführungsbeispiele der Erfindung schematisch dargestellt und näher erläutert. Darin zeigt:
Fig. 1 eine schematische Darstellung eines Abschnitts eines selbstführenden Zahnriemens mit Führungselementen auf einer Antriebsseite gemäß eines ersten Ausführungsbeispiels.
Fig. 2 eine schematische Darstellung eines Abschnitts eines selbstführenden Zahnriemens mit Führungselementen auf einer Rückenseite gemäß eines zweiten Ausführungsbeispiels.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung. Die Längsrichtung X kann auch als Tiefe X, die Querrichtung Y auch als Breite Y und die vertikale Richtung auch als Höhe bezeichnet werden. Die Längsrichtung X und die Querrichtung Y bilden gemeinsam die Horizontale, X, Y, welche auch als horizontale Ebene X, Y bezeichnet werden kann.

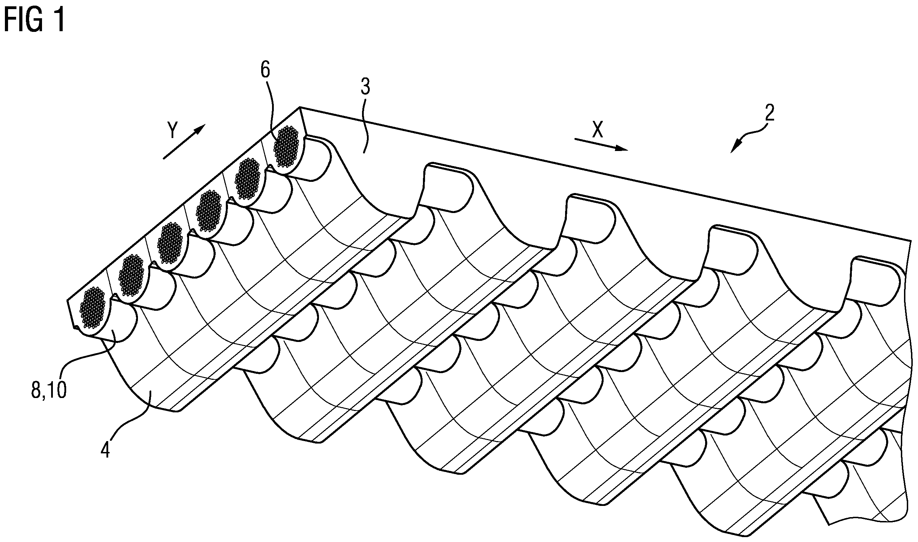

Figur 1 zeigt einen Abschnitt eines Zahnriemen 2 mit einem Grundkörper aus Polyurethan 3 gemäß eines ersten Ausführungsbeispiels. In das Polyurethan 3 sind in Längsrichtung X des Zahnriemens 2 verlaufende und parallel zueinander angeordnete Festigkeitsträger 6 eingebettet. Zwischen den Paaren benachbarter Zähne 4 sind in Längsrichtung X verlaufende Führungselemente 8 angeordnet. Die Führungselemente 8 umfassen jeweils das Polyurethan 3 und einen darin eingebetteten Festigkeitsträger 6. Die Außenkontur 10 der Führungselemente 8 folgt dabei einer im Querschnitt teilkreisförmigen Geometrie der Festigkeitsträger 6. Die Festigkeitsträger 6 sind mit 50 % des Durchmessers in den Führungselementen 8 angeordnet. Die Führungselemente 8 können in korrespondierende Nuten einer Riemenscheibe eingreifen, wodurch der Zahnriemen 2 seitlich zwangsgeführt werden kann. Die Festigkeitsträger 6 versteifen die Führungselemente 8, sodass die Führungselemente 8 auch bei großen Querkräften ihre Geometrie beibehalten und eine zuverlässige seitliche Führung des Zahnriemens 2 gewährleisten können.

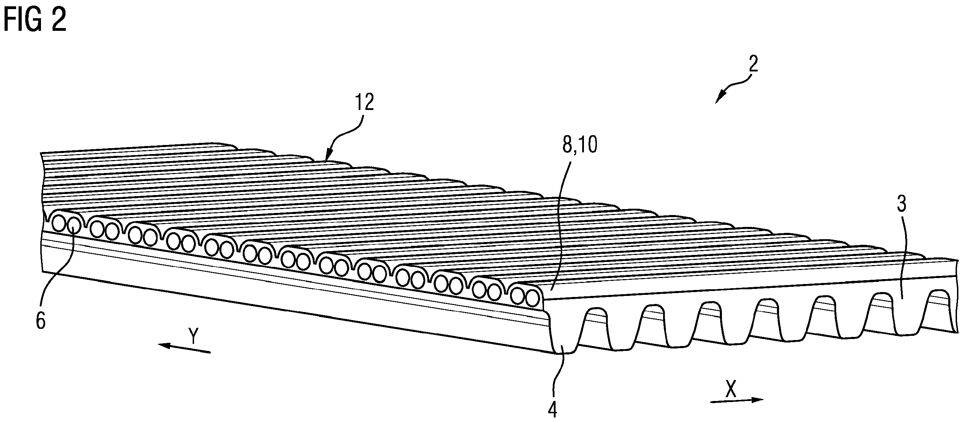

Figur 2 zeigt einen Abschnitt eines Zahnriemen 2 mit einem Grundkörper aus Polyurethan 3 gemäß eines zweiten Ausführungsbeispiels. In das Polyurethan 3 sind in Längsrichtung X des Zahnriemens 2 verlaufende und parallel zueinander angeordnete Festigkeitsträger 6 eingebettet. Auf einer den Zähnen 4 gegenüberliegenden Riemenrückenseite 12 sind in Längsrichtung X verlaufende Führungselemente 8 angeordnet. Die Führungselemente 8 umfassen jeweils das Polyurethan 3 und zwei darin eingebettete Festigkeitsträger 6. Die Außenkontur 10 des Führungselements 8 folgt dabei abschnittsweise einer im Querschnitt teilkreisförmigen Geometrie des Festigkeitsträgers 6. Die Festigkeitsträger 6 sind mit 50 % des Durchmessers in den Führungselementen 8 angeordnet. Die Führungselemente 8 können in korrespondierende Nuten einer Umlenk- bzw. Rückenrolle eingreifen, wodurch der Zahnriemen 2 seitlich zwangsgeführt werden kann.

### Bezugszeichenliste (Teil der Beschreibung)

- 2: Zahnriemen
- 3: Polymeres Material, Polyurethan
- 4: Zahn
- 6: Festigkeitsträger
- 8: Führungselement
- 10: Außenkontur des Führungselements
- 12: Riemenrückenseite

- X: Längsrichtung; Tiefe
- Y: Querrichtung; Breite
- Y: X, Horizontalen; horizontale Ebene

## Patentansprüche

1. Zahnriemen (2) aufweisend einen Grundkörper aus polymerem Material (3), mehrere Zähne (4) sowie in Längsrichtung (X) verlaufende Festigkeitsträger (6),
wobei die Festigkeitsträger (6) im Wesentlichen von dem polymeren Material (3) umgeben sind,
wobei der Zahnriemen (2) wenigstens ein in Längsrichtung (X) verlaufendes Führungselement (8) mit einer Außenkontur (10) aufweist,
wobei das Führungselement (8) das polymere Material (3) und wenigstens einen der Festigkeitsträger (6) aufweist,
**dadurch gekennzeichnet, dass**
der Festigkeitsträger (6) wenigstens abschnittsweise, vorzugsweise vollständig in dem Führungselement (8) angeordnet ist.

2. Zahnriemen (2) nach Anspruch 1,
**dadurch gekennzeichnet, dass**
der Festigkeitsträger (6) mit wenigstens 25 %, vorzugsweise 50 % des Durchmessers in dem Führungselement (6) angeordnet ist.

3. Zahnriemen (2) nach Anspruch 1 oder 2,
**dadurch gekennzeichnet, dass**
das Führungselement (8) zwischen wenigstens einem Paar benachbarter Zähne (4) angeordnet ist.

4. Zahnriemen (2) nach Anspruch 1 oder 2,
**dadurch gekennzeichnet, dass**
das Führungselement (8) auf einer den Zähnen (4) gegenüberliegenden Riemenrückenseite (12) angeordnet ist.

5. Zahnriemen (2) nach einem der vorhergehenden Ansprüche,
**dadurch gekennzeichnet, dass**
das Führungselement (8) zwei Festigkeitsträger (6) umfasst.

6. Zahnriemen (2) nach einem der vorhergehenden Ansprüche,
**dadurch gekennzeichnet, dass**
das polymere Material (3) ein Polyurethan ist.

7. Zahnriemen (2) nach einem der vorhergehenden Ansprüche,
**dadurch gekennzeichnet, dass**
die Außenkontur (10) des Führungselements (8) im Querschnitt teilkreisförmig ausgebildet ist.

8. Zahnriemen (2) nach einem der Ansprüche 1 bis 6,
**dadurch gekennzeichnet, dass**
die Außenkontur (10) des Führungselements (8) im Querschnitt trapezförmig ausgebildet ist.

9. Riementrieb mit wenigstens einer Riemenscheibe und einem Zahnriemen (2) nach einem der vorhergehenden Ansprüche.

10. Fahrrad mit einem Riementrieb nach Anspruch 9.

11. Hubvorrichtung mit einem Riementrieb nach Anspruch 9.
